**Europäisches Patentamt**

(19) **European Patent Office**

**Office européen des brevets**

(11) Numéro de publication: **0 053 065**
**B1**

(12) # FASCICULE DE BREVET EUROPEEN

(45) Date de publication du fascicule du brevet:
**14.08.85**

(21) Numéro de dépôt: **81401803.2**

(22) Date de dépôt: **17.11.81**

(51) Int. Cl.⁴: **G 01 B 11/275**, G 01 B 5/255

(54) **Appareillage pour contrôler la géométrie des roues d'un véhicule.**

(30) Priorité: **21.11.80 FR 8024762**

(43) Date de publication de la demande:
**02.06.82 Bulletin 82/22**

(45) Mention de la délivrance du brevet:
**14.08.85 Bulletin 85/33**

(84) Etats contractants désignés:
**DE GB IT**

(56) Documents cités:
**FR - A - 852 617**
**FR - A - 2 347 654**
**FR - A - 2 381 993**
**FR - A - 2 429 413**
**GB - A - 118 923**
**GB - A - 792 921**
**GB - A - 2 060 912**
**US - A - 2 586 194**

(73) Titulaire: **FACOM, Société dite:, 6 et 8 Rue Gustave Eiffel, F-91423 Morangis (FR)**

(72) Inventeur: **Caroff, Yves, 68 Rue Herbillon, F-94160 Saint Mande (FR)**

(74) Mandataire: **Polus, Camille et al, c/o Cabinet Lavoix 2, Place d'Estienne d'Orves, F-75441 Paris Cedex 09 (FR)**

ACTORUM AG

## Description

La présente invention est relative aux appareillages utilisés pour le contrôle et le réglage des roues de véhicule, l'alignement des essieux avant et arrière, le parallélisme, et les angles de chasse et de pivot des roues avant.

L'un des systèmes les plus répandus pour effectuer le contrôle de la géométrie des roues d'un véhicule utilise le principe de la projection sur un écran fixe d'un faisceau lumineux émis par une source montée dans une position donnée sur la roue d'un véhicule.

Une source lumineuse étant montée sur chacune des roues avant d'un véhicule, par exemple au moyen d'un porte-projecteur classique du type utilisé pour contrôler le voile des roues, projette un faisceau lumineux transversalement sur un écran porté par l'autre roue, et les écarts constatés entre les points d'impact sur les écrans respectifs des faisceaux provenant de chaque source fournissent des éléments à partir desquels un technicien peut calculer la valeur des corrections à effectuer.

Cependant, ces indications sont affectées par de nombreux facteurs qui compliquent les calculs et qui sont des sources d'erreur.

En effet, les porte-projecteurs utilisés, du type avec lequel on contrôle le voile des roues sont difficilement centrables concentriquement à la fusée de la roue ce qui introduit un premier facteur d'erreur. En outre les jantes présentent très souvent au bord un léger défaut ce centrage et les fusées des deux côtés du véhicule ne sont pas nécessairement exactement à leur emplacement théorique géométrique.

Enfin, les fusées arrière gauche et droite ne se trouvent pas toujours à leur emplacement théorique et sur certains véhicules les axes des roues arrières gauche et droite peuvent en outre présenter un certain décalage longitudinal, habituellement désigné par «set-back».

Il convient bien entendu de tenir compte de ces différents défauts et caractéristiques dans le calcul des valeurs des corrections devant être effectuées.

De plus les appareillages utilisés dans les ateliers sont souvent sujets à des chocs susceptibles de les déformer et le contrôle initial ou étalonnage des appareils nécessite un outillage spécial encombrant et est long et par suite coûteux.

On connaît déjà un appareil décrit au brevet français FR-A-852 617, destiné à être utilisé pour mesurer les angles de pincement, de carrossage, de chasse et de pivotement des roues d'un véhicule, qui comprend deux bâtis comprenant chacun une barre de support allongée pourvue de pieds et adaptés pour être posés sur le sol, parallèlement aux roues avant et contre celles-ci.

Un ensemble comprenant une source lumineuse et un tableau gradué est monté mobile le long de l'une desdites barres de support tandis qu'un miroir de renvoi du faisceau du projecteur est monté mobile le long de l'autre barre de support.

Cet appareil est imprécis, tout d'abord en raison du fait que les bâtis de support sont seulement posés sur le sol et contre les roues, sans fixation aucune, et ensuite en raison du fait qu'il ne tient aucun compte de l'alignement sur les roues arrière. Enfin il nécessite de nombreux dispositifs accessoires différents, et ne fournit que des indications globales sans valeur puisqu'elles ne tiennent pas compte de l'alignement.

On connait également un appareil plus précis, dans la demande française FR-A-2 429 413 comprenant deux bras montés sur les roues avant au moyen de dispositifs réglables du type porte-projecteur; et ayant chacun intérieurement une source lumineuse émettant un faisceau renvoyé à angle droit au moyen d'un miroir orientable, transversalement à l'axe du véhicule, la position du miroir étant commandée par un tambour gradué.

Un repère est porté sur chaque bras au voisinage du miroir.

Comme le précédent, cet appareil ne tient pas compte de l'alignement sur les roues arrière. De même, il ne fournit qu'une indication globale de valeur angulaire et nécessite un calcul algébrique, avec des tambours gradués auxiliaires.

On connait enfin un appareil décrit dans la demande française FR-A-2 347 654 qui comprend des moyens mécaniques associés à des moyens optiques à visée oculaire directe et à des moyens électroniques donnant une mesure électrique de la position angulaire d'un câble souple. Bien que tenant compte de l'alignement cet appareil est compliqué, coûteux, fragile et imprécis, notamment en raison de la visée oculaire et de la souplesse du câble.

Il est enfin également connu dans la technique d'utiliser une même source lumineuse pour émettre, non seulement le faisceau réfléchi transversalement à l'avant, mais en outre un faisceau dirigé vers l'arrière sur un écran solidaire des roues arrière afin de vérifier l'alignement.

En ce qui concerne le contrôle des angles de chasse et de pivot le système répandu consiste à utiliser un appareil que l'on fixe également sur un porte-projecteur concentriquement à la fusée de la roue dont on désire contrôler la géométrie, cet appareil comportant un levier articulé portant un niveau à bulle réglable. La roue étant braquée d'un certain angle on règle le niveau en position horizontale et, après avoir braqué la roue d'un angle égal en sens opposé, on ramène la bulle dans la même position au moyen d'un mécanisme à came agissant sur le levier articulé, ce mécanisme comportant un bouton de commande, et une échelle graduée sur laquelle on peut lire la valeur de la correction devant être effectuée.

On sait que pour effectuer un contrôle précis de la géométrie des roues du train avant d'un véhicule il convient d'effectuer le contrôle non seulement du parallélisme mais également des angles de pivot, de chasse et de carrossage. Avec les appareils existant, ces différentes mesures doivent être effectuées en plusieurs opérations avec des appareils distincts, il existe par conséquent un risque d'oubli ou de négligence. Enfin, les calculs nécessaires des valeurs de correction, au moins pour le parallélisme, nécessitent soit que les opérations soient effectuées par un personnel très qualifié, soit que l'opérateur s'adresse à un tel personnel pour lui demander d'effectuer les calculs si ses connaissances ne le lui permettent pas.

L'invention a pour but de remédier à ces inconvénients en réalisant un appareillage unique pour le contrôle de la géométrie des roues d'un véhicule et notamment du train avant, qui fournisse premièrement une lecture directe des valeurs de correction à effectuer, après compensation des différents facteurs d'erreurs, deuxièmement qui puisse être étalonné dans nécessiter d'appareillage auxiliaire et troisièmement qui permette d'effectuer toutes les opérations de contrôle et de réglage sur les roues du véhicule sans changement d'appareil.

L'invention a pour objet à cet effet un appareillage pour le contrôle de la géométrie des roues d'un véhicule, du type comprenant en combinaison deux dispositifs de sens opposé destinés à être fixés respectivement sur deux roues opposées d'un véhicule, parallèlement à celles-ci et comprenant chacun une première règle rigide tubulaire creuse comportant des moyens de fixation sur un porte-projecteur, des moyens à l'intérieur de la règle pour projeter longitudinalement un faisceau lumineux, ce faisceau étant réfléchi à une extrémité de la première règle par un miroir solidaire d'un écran et disposé de façon à projeter ledit faisceau transversalement vers un écran porté par le dispositif opposé, caractérisé en ce que sur au moins l'un de ces dispositifs, un ensemble miroir-écran est monté à une extrémité d'une seconde règle tubulaire creuse dont l'autre extrémité est engagée de façon à coulisser télescopiquement dans ladite première règle, de façon à pouvoir se déplacer en se rapprochant et en s'éloignant desdits moyens de fixation, et en ce qu'il comprend sur chaque dispositif des organes adaptés pour recevoir un sous-ensemble de contrôle des angles de pivot et de chasse, et des moyens pour fixer un dispositif de mesure de l'angle de carrossage.

Suivant un mode de réalisation de l'invention, sur chaque dispositif le miroir est monté coulissant par rapport auxdits moyens de fixation.

Suivant un autre mode de réalisation, la première règle est articulée sur les moyens de fixation de façon à osciller dans un plan parallèle à la roue sur laquelle est fixé de dispositif.

D'une façon avantageuse, la règle est articulée sur les moyens de fixation par l'intermédiaire d'un parallélogramme déformable.

D'autres modes de réalisation et avantages de l'invention apparaîtront au cours de la description qui va suivre, faite en se référant aux dessins annexés donnés uniquement à titre d'exemple et dans lesquels:

– la Fig. 1 est une vue en perspective de l'un des dispositifs d'un appareillage suivant l'invention, pour le contrôle de la géométrie des roues d'un véhicule, comprenant un sous-ensemble de contrôle des angles de chasse, de pivot et de carrossage, le dispositif associé de sens opposé étant représenté partiellement;

– la Fig. 2 est un schéma montrant l'utilisation de l'appareillage, pour le contrôle de l'alignement des roues avant et arrière et du parallélisme;

– la Fig. 3 est une vue en élévation latérale d'un sous-ensemble faisant partie du dispositif représenté à la Fig. 1 pour le contrôle simultané des angles de pivot et de chasse;

– la Fig. 4 est une vue en plan de dessous montrant l'agencement du levier en équerre du mécanisme du sous-ensemble représenté à la Fig. 4;

– la Fig. 5 est une vue partielle montrant une variante des moyens permettant de déplacer le miroir longitudinalement sur la règle par rapport au point de fixation du dispositif sur la roue.

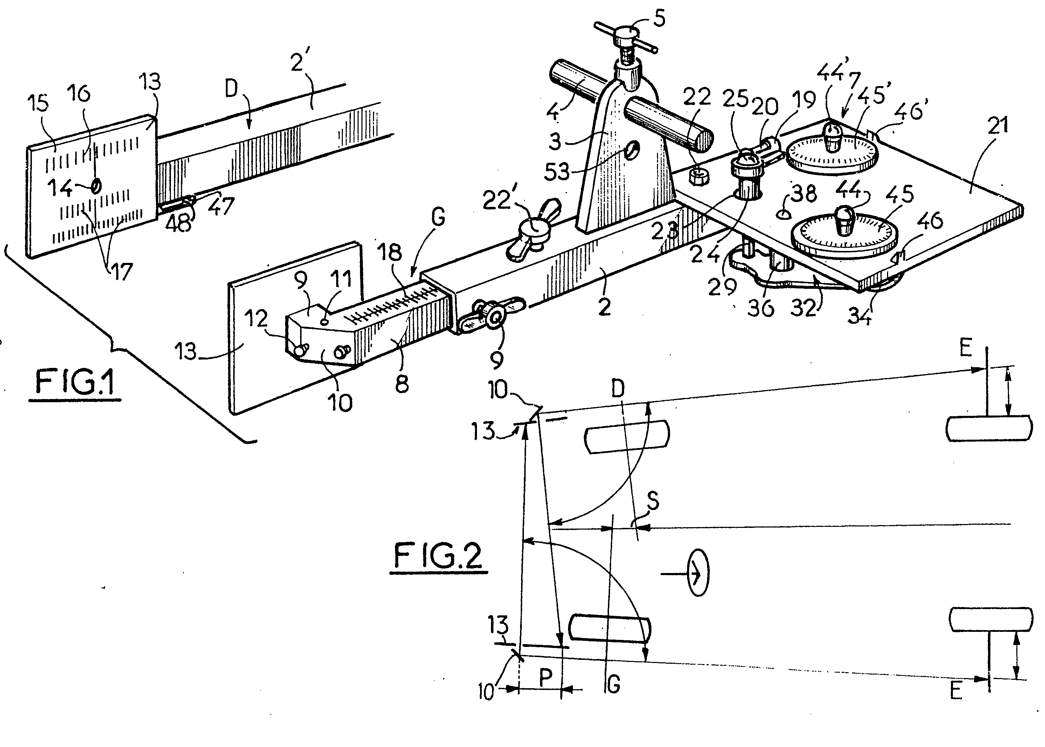

Suivant le mode de réalisation représenté à la Fig. 1, l'appareillage suivant l'invention comprend deux dispositifs analogues de sens opposé de droite D et de gauche G dont seul le dispositif de gauche G est représenté en entier au dessin, le dispositif de droite D n'étant représenté que partiellement pour montrer sa partie différente.

Le dispositif désigné dans son ensemble par la référence G comprend de façon connue une première règle rigide tubulaire creuse 2 qui dans cet exemple est de section carrée, comportant sur l'une de ses faces une ferrure de support 3 au moyen de laquelle la règle 2 peut être suspendue à un porte-projecteur (non représenté) d'un type classique connu (par exemple du type U75 FA-COM) au moyen d'une tige 4 disposée perpendiculairement et de façon coulissante dans un trou ménagé à l'extrémité de la ferrure 3, cette dernière pouvant être immobilisée sur la tige 4 au moyen d'une vis d'arrêt 5.

La règle 2 comporte intérieurement de façon connue une source lumineuse et un dispositif optique à lentilles (non représentés) adaptés pour projeter un faisceau lumineux dans le sens longitudinal de la règle 2, ce faisceau pouvant sortir par les deux extrémités de celle-ci.

Dans les appareils de type connu, un miroir est fixé à l'une des extrémités de la règle et est disposé à 45° par rapport à l'axe du faisceau lumineux afin de réfléchir celui-ci transversalement. De plus un écran est adapté pour être fixé adjacent au miroir.

Suivant l'invention le dispositif G comprend une deuxième règle tubulaire creuse 8 ayant une forme et des dimensions appropriées pour permettre de la monter coulissante télescopiquement à l'intérieur de la règle 2 dans laquelle elle peut être immobilisée dans une position longitudinale quelconque par exemple au moyen d'une vis d'arrêt 9.

A son extrémité externe la règle 8 présente un coude également creux 9 dont le sommet est coupé à 45° et porte un miroir 10 monté pivotant sur un axe vertical 11 et pouvant être réglé au moyen de vis 12.

Grâce à cet agencement le faisceau lumineux émis à l'intérieur de la règle 2 suivant l'axe de

celle-ci est réfléchi par le miroir 10 incliné à peu près à 45° pour sortir latéralement, perpendiculairement à son trajet initial.

Le coude 9 porte à son extrémité ouverte une plaquette 13 percée d'un trou central 14 situé de façon à coïncider avec le rayon lumineux réfléchi par le miroir 10, la plaquette 13 portant fixée sur elle un écran 15 sur lequel est portée une échelle graduée 16, 17, par exemple en mm, ou encore en degrés d'angle, ou les deux, ces graduations s'étendant longitudinalement de part et d'autre d'une origine commune 0 qui coïncide avec le trou 14.

D'une façon avantageuse la règle 8 peut porter sur sa face supérieure une graduation 18, dans un but qui apparaîtra dans la suite.

Le dispositif décrit ci-dessus représenté à la Fig. 1 comporte, fixé sur lui, un sous-ensemble 7 destiné à effectuer une opération de contrôle des angles de pivot et de chasse, complémentaire de l'opération de contrôle du parallélisme effectué au moyen des faisceaux lumineux et des écrans 15.

Le sous-ensemble 7 fixé au voisinage de l'extrémité opposée de la règle 2 comprend une plaque de support 21 fixée sur la paroi supérieure de la règle 2 par exemple au moyen de vis 22 (dont une seule est représentée au dessin) de façon à s'étendre horizontalement, lorsque le dispositif est fixé sur un porte-projecteur monté sur une roue de véhicule, à peu près perpendiculairement par rapport à l'axe de la règle 2.

Un premier niveau à bulle 19 fixé sur la plaque 21 parallèlement à l'axe de la règle 2, sa bulle étant visible par une ouverture supérieure 20.

La plaque 21 comporte un trou 23 à travers lequel s'étend à peu près verticalement un bras 24 portant à son extrémité supérieure un niveau sphérique à bulle 25.

Les diamètres respectifs du trou 23 et du bras 24 sont adaptés pour ménager entre eux un jeu important dans un but qui apparaîtra dans la suite.

L'extrémité du bras 24 opposée au niveau 25 comporte un alésage borgne 26 dont l'extrémité est contre-alésée de façon à présenter une forme semi-sphérique comme représenté en 27, afin de recevoir et enserrer une rotule 28 solidaire d'une tige 29, un ressort 30 étant disposé dans l'alésage 26 suivant un agencement classique pour maintenir le bras 24 en position à frottement, sur la rotule 28.

La tige 29 de la rotule 28 est fixée, par exemple vissée, rivée ou soudée sur une patte 31 solidaire d'un levier coudé 32 ayant deux branches 33, 34 respectivement dont les axes forment entre eux un angle droit de sommet 35, la patte 31 étant de préférence adjacente à ce sommet.

Le levier 32 coudé en équerre est fixé à la face inférieure de la plaque 21 au moyen d'un joint universel 37 dont une chape 36 est fixée au sommet 35 du levier tandis que son autre chape 38 est fixée sur la plaque 21.

D'une façon avantageuse une partie élargie 39 du levier 32 située entre les bords internes de ses branches 33 et 34 est reliée à la face inférieure de la plaque 21, en un point qui est de préférence situé sur la bissectrice de l'angle formé par les branches du levier 32, au moyen d'un ressort 40 tendu de façon à forcer les branches du levier vers la plaque 21.

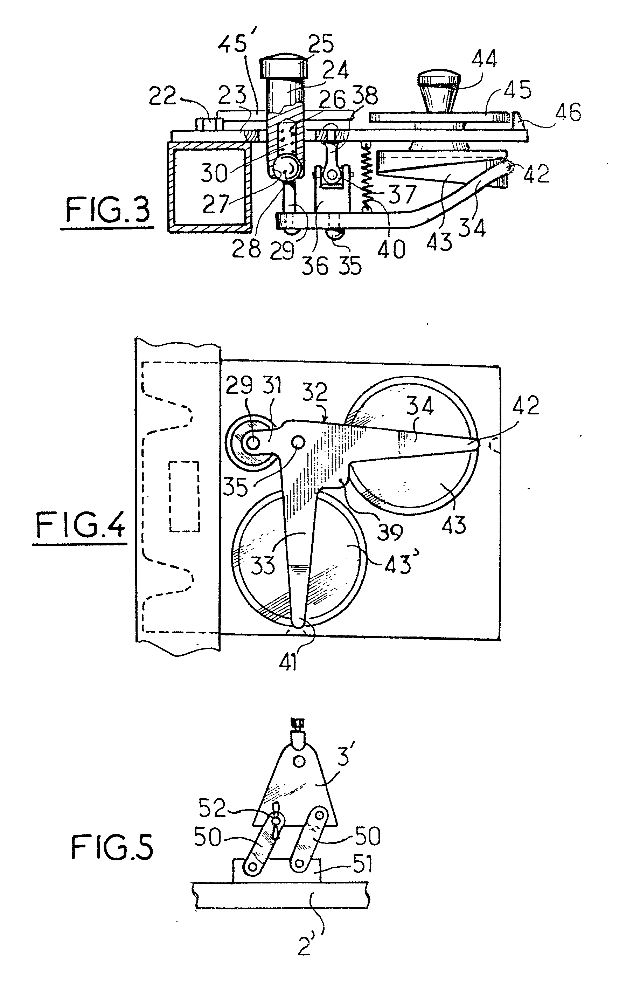

Les extrémités 41, 42 des branches du levier 32 sont incurvées vers la plaque 21 comme représenté à la Fig. 3 et constituent des contre-cames qui sont chacune en contact avec la rampe hélicoïdale d'une came 43, 43' montée rotative au-dessous de la plaque 21 sur un axe s'étendant à travers celle-ci et portant à son extrémité opposée un bouton de commande 44, 44' solidaire d'un plateau circulaire gradué 45, 45' adapté pour tourner devant un repère fixe 46, 46' solidaire de la plaque 21.

Le dispositif comprenant une came 43, 43' et un bouton de commande avec un plateau gradué est connu en lui-même et utilisé dans les appareils classiques.

Le fonctionnement de l'appareillage suivant l'invention est le suivant.

Les roues avants du véhicule ayant été au préalable disposées sur des plaques tournantes graduées, on fixe un dispositif suivant l'invention sur un porte projecteur monté sur chacune des roues avant d'un véhicule et on procède aux opérations habituelles de contrôle de l'alignement au moyen du faisceau lumineux projeté vers les roues arrières sur un écran E fixé au voisinage de chacune de celles-ci (Fig. 2).

La projection du faisceau lumineux transversal est utilisée comme dans les dispositifs de la technique antérieure pour le contrôle et le réglage du parallélisme.

Cependant grâce au montage des écrans 15 sur les règles 8 montées coulissantes dans les règles 2, il est alors possible de déplacer les miroirs 10 et par conséquent le point d'arrivée du faisceau lumineux transversal émis par chaque dispositif sur l'écran opposé en l'écartant ou en le rapprochant du point fixé constitué par la fixation sur la roue. On peut ainsi afficher et lire directement sur l'un des écrans la valeur globale du parallélisme et par suite de la correction à effectuer.

En effet, après avoir effectué l'alignement sur les roues arrières, on peut neutraliser le décalage longitudinal (set-back) désigné par S à la Fig. 2, entre les roues par un déplacement longitudinal du miroir et de l'écran du côté gauche pour amener la projection lumineuse provenant de ce dispositif de gauche sur la graduation 0 de l'écran du dispositif de droite.

On a ainsi affiché sur l'écran de gauche, grâce à ce déplacement longitudinal, la valeur globale P du parallélisme, tandis que l'alignement sur les roues arrières n'a pas été modifié.

En outre, par suite de l'alignement, chaque roue avant présente alors le même angle de pincement ou d'ouverture, c'est-à-dire pour chaque roue la moitié de la valeur globale affichée sur l'écran de gauche, soit ½ P.

Par conséquent, pour obtenir la lecture directe de la valeur du parallélisme roue par roue sans qu'il soit nécessaire d'effectuer un calcul, il suffit de déplacer l'écran du dispositif de gauche jus-

qu'au moment où l'on obtient la même valeur affichée sur les deux écrans: $\pm$ ½ P. Ce procédé est ainsi à la portée d'un personnel n'ayant pas de qualification technique poussée puisqu'il permet d'exclure tout calcul.

Cependant l'alignement initial sur les écrans E des roues arrières, qui constitue une étape pour cette opération, n'est pas toujours suffisant car sur de nombreux véhicules il existe un repère de direction qu'il faut respecter, ce qui nécessite un réalignement.

Après ce réalignement, les valeurs égales de gauche et de droite qui étaient affichées sur les écrans transversaux arrières sont alors différentes, mais leur somme reste inchangée. On obtient ainsi la valeur du parallélisme roue par roue en fonction du repère de direction du constructeur.

Dans cette position il est facile de régler chaque zone successivement, en suivant au cours de l'opération le déplacement du point d'arrivée du faisceau lumineux sur l'écran opposé à la roue en cours de réglage, jusqu'à afficher la moitié de la valeur du parallélisme global indiqué par le constructeur.

Après ce réglage, les valeurs affichées sur les écrans arrière E seront différentes des valeurs initiales, mais seront égales. On voit que, par conséquent, l'alignement, le centrage de la direction et le réglage du parallélisme sont obtenus simultanément, sans calcul ni tatonnement, au moyen de l'appareil suivant l'invention.

Il est bien entendu nécessaire que les règles des dispositifs sur chaque roue soient toutes deux aussi proches que possible de l'horizontale. En conséquence pour procéder à ce réglage des dispositifs on utilisera le niveau à bulle 19 prévu sur le sous-ensemble 7, ce niveau à bulle étant également utilisé préalablement au contrôle effectué au moyen de ce sous-ensemble.

Pour compléter les opérations de contrôle de la géométrie du train avant il est alors indispensable d'effectuer un contrôle des angles de pivot et de chasse, ce qui peut être effectué au cours de la même opération au moyen du sous-ensemble 7.

Après avoir contrôlé au préalable au moyen du niveau à bulle 19 que le dispositif est horizontal lorsque le braquage est nul, on braque la roue gauche vers la gauche par exemple de 20° et on oriente les deux disques gradués 45, 45' avec leur graduation 0 en face du repère fixe correspondant.

On oriente alors à la main le second niveau sphérique à bulle 25 en le faisant osciller autour de la rotule 28 grâce au jeu ménagé entre la tige 24 et le rebord du trou 23 de la plaque 21 jusqu'à ce que la bulle du niveau 25 se trouve exactement centrée.

On redresse alors la direction et on braque la roue gauche vers la droite du même angle de 20° et, en raison du mouvement de bascule de la roue qui en résulte, la bulle du niveau 25 n'est plus centrée. On fait alors tourner les deux boutons de commande 44, 44' qui agissent chacun sur l'une des deux branches 33, 34 à angle droit du levier 32, chacun des dispositifs à came déplaçant le bras de levier associé dans un plan formant un angle droit par rapport au plan dans lequel se déplace l'autre levier. En combinant l'action des deux dispositifs à came on recentre alors la bulle du niveau 25. On peut alors lire directement sur les disques gradués 45 et 45' les valeurs des angles de chasse et de pivot obtenues simultanément. Il en résulte qu'il est impossible de ne mesurer qu'un seul des deux angles, ce qui oblige l'opérateur à faire un contrôle complet et par conséquent à découvrir un défaut, qui avec les appareils classiques, serait passé inaperçu.

On remarquera qu'il est prévu un niveau à bulle 47 sur la face inférieure de chaque règle 2 au voisinage de son extrémité dans laquelle coulisse la règle 8, ce niveau 47 ayant une bulle visible sur une fente latérale 48 orientée vers l'intérieur. Ce niveau 47 est utile lorsque la voiture est sur un pont et que l'utilisateur travaille au-dessous. Il lui permet alors de vérifier que les dispositifs sont tous deux horizontaux tandis que le niveau 19 est alors difficilement accessible.

On a représenté à la Fig. 5 une variante du dispositif suivant l'invention dans laquelle le déplacement du point d'émission du faisceau lumineux transversal par rapport au point de fixation du dispositif sur la fusée de la roue est assuré de façon différente au moyen de deux biellettes 50 articulées par une extrémité en des points espacés l'un de l'autre aux extrémités de la partie inférieure de la ferrure 3'. Les extrémités opposées des biellettes 50 sont articulées à la même distance l'une de l'autre sur un support 51 de telle sorte que ces biellettes se trouvent parallèles, le support 51 étant fixé lui-même sur la partie supérieure de la règle 2', constituant ainsi un parallélogramme déformable qui permet de déplacer la règle 2' vers l'avant ou vers l'arrière de la distance nécessaire pour la plupart des opérations de contrôle. La très faible variation de hauteur qui résulte de ce déplacement est pratiquement sans influence sur la précision de la lecture obtenue. Un écrou à oreilles 52 permet d'immobiliser le parallélogramme constitué par les biellettes 50 dans une position quelconque de la règle 2'.

Cet agencement permet également de faire varier la hauteur de la règle 2' par rapport à l'axe de la roue. Si on le désire il peut être prévu dans les ferrures de support 3 du mode de réalisation représenté à la Fig. 1, un ou plusieurs trous tels que 53 dans l'un desquels peut être disposée la tige 4.

On remarquera enfin qu'il est possible d'utiliser une graduation telle que la graduation 18 portée sur la règle coulissante 8 pour lire les valeurs des déplacements du miroir et de l'écran par rapport au bord de l'extrémité de la règle 2, et découvrir ainsi un «set-back» excessif résultant d'une déformation de l'essieu et non pas uniquement d'un mauvais centrage.

La graduation 18 permet de mesurer le «set-back». Au-delà de 10 mm il existe une anomalie dans l'alignement des deux fusées qui ne se trouvent pas sur le même axe transversal (essieu).

Cette graduation sert donc de diagnostic pour alerter le manipulateur qui doit en rechercher la cause (par exemple, déformation du chassis à la suite d'un choc).

La neutralisation du «set-back» par coulissement de la règle 8 présente donc une possibilité intéressante pour la sécurité de tenue de route du véhicule.

D'une façon avantageuse, il peut être prévu des moyens pour donner à la projection du faisceau lumineux transversal sur l'écran opposé une forme allongée verticalement, avec un bord rectiligne. Cette forme permet à la projection du faisceau de couvrir toute la hauteur des graduations sur l'écran.

On notera également que la forme en section des règles 2, 2' et 8, peut être différente de celle représentée, par exemple circulaire permettant un réglage en hauteur de la projection lumineuse sur les écrans.

Il ressort de ce qui précède que l'invention fournit un appareillage qui permet de supprimer la plupart des inconvénients de ceux de la technique antérieure par des moyens simples, peu coûteux et utilisables directement par un personnel sans qualification particulière.

L'appareillage suivant l'invention permet également le calage de la crémaillère de direction de façon classique. Enfin il comprend des moyens 22' adaptés pour permettre la fixation d'un appareil classique de mesure de l'angle de carrossage.

Enfin, suivant un mode de réalisation, également avantageux, non représenté, l'ensemble miroir-écran 10, 13 est monté mobile sur chaque dispositif, soit au moyen d'une règle coulissante comme représenté à la Fig. 1, soit au moyen d'un parallélogramme, comme représenté à la Fig. 5.

Un autre avantage de l'invention consiste en ce que, lorsque le véhicule se trouve sur un pont élévateur, par exemple à une hauteur d'environ 1,5 mètres, l'opérateur peut observer sans se déplacer les deux écrans avant et les deux écrans arrière, en se plaçant approximativement à 1 mètre en avant et au milieu de l'essieu avant et en regardant sous le véhicule.

De cet emplacement les ensembles miroir-écran se trouvent à portée de sa main et les réglages pour contrôler le parallélisme et l'alignement sont faciles et rapides, ce qui résulte également du montage des miroirs sur des règles télescopiques.

Enfin, après avoir effectué les mesures, on peut intervertir les dispositifs en montant celui de la roue avant droite sur la roue avant gauche et inversement avec les ensembles miroir-écran vers l'arrière, ce qui permet à l'opérateur de travailler depuis l'avant sans occulter les faisceaux transversaux.

**Revendications**

1. Appareillage pour le contrôle de la géométrie des roues d'un véhicule, du type comprenant en combinaison deux dispositifs (D, G) de sens opposé, destinés à être fixés respectivement sur deux roues opposées d'un véhicule, parallèlement à celles-ci, et comprenant chacun une première règle (2, 2') rigide tubulaire creuse comportant des moyens de fixation (3, 4) sur un porte-projecteur, des moyens à l'intérieur de la règle pour projeter longitudinalement un faisceau lumineux, ce faisceau étant réfléchi à une extrémité de la première règle (2, 2') par un miroir (10) solidaire d'un écran (15) disposé de façon à projeter ledit faisceau transversalement vers l'écran (15) porté par le dispositif opposé, caractérisé en ce que sur au moins l'un de ces dispositifs (D, G) un ensemble constitué par le miroir (10) et l'écran (15) est monté sur une extrémité d'une seconde règle tubulaire creuse (8) dont l'autre extrémité est engagée de façon à coulisser télescopiquement dans ladite première règle (2), de façon à pouvoir se déplacer en se rapprochant et en s'éloignant desdits moyens de fixation (3, 4), et en ce qu'il comprend sur chaque dispositif (D, G) des organes (22) adaptés pour recevoir un sous-ensemble (7) de contrôle des angles de pivot et de chasse, et des moyens (22') pour fixer un dispositif de mesure de l'angle de carrossage.

2. Appareillage suivant la revendication 1, caractérisé en ce que, sur chaque dispositif (G et D), le miroir (10) est monté coulissant par rapport auxdits moyens de fixation (3, 4).

3. Appareillage suivant la revendication 1, caractérisé en ce que ladite première règle (2, 2') est articulée sur lesdits moyens de fixation (3, 4), de façon à osciller dans un plan parallèle à la roue sur laquelle est fixé le dispositif (D, G).

4. Appareillage suivant la revendication 3, caractérisé en ce que ladite première règle (2, 2') est articulée sur lesdits moyens de fixation (3, 4) par l'intermédiaire de biellettes (50) constituant un parallélogramme déformable (3, 50, 2, 50) pouvant être immobilisé dans une configuration quelconque, par exemple au moyen d'au moins une vis de blocage (52).

5. Appareillage suivant la revendication 4, caractérisé en ce que ledit sous-ensemble (7) comprend un support (21) adapté pour être fixé horizontalement et perpendiculairement à ladite première règle (2, 2') et portant un premier niveau sphérique à bulle (19), un second niveau à bulle (25) articulé au moyen d'une rotule (28) sur un levier en équerre (32) articulé de façon universelle par son sommet (35) sur ledit support (21) et dont les extrémités opposées (41, 42) sont reliées chacune à un mécanisme à came (43, 43') connu en soi, qui commande l'inclinaison dudit levier en équerre (32) dans deux plans orthogonaux, et des moyens pour déplacer ledit miroir (10) à peu près parallèlement à l'axe dudit faisceau par rapport au point de fixation du dispositif sur ledit porte-projecteur.

6. Appareillage suivant la revendication 1, caractérisé en ce qu'il comprend des moyens (9) pour immobiliser ladite seconde règle (8) par rapport à la première règle (2, 2').

7. Appareillage suivant la revendication 6, caractérisé en ce que ladite première règle (2, 2') et ladite seconde règle (8) ont en section des formes complémentaires circulaires.

## Claims

1. An apparatus for inspecting the geometry of the wheels of a vehicle, of the type comprising in combination two devices (D, G), of opposite direction adapted to be fixed respectively to the two opposed wheels of a vehicle, and parallel to said wheels and each comprising a first hollow tubular rigid bar (2, 2') comprising means (3, 4) for fixing it to a projector carrier, means inside the bar for longitudinally projecting a beam of light, said beam being reflected at one end of the first bar (2, 2') by a mirror (10) rigid with a screen (15) disposed in such manner as to project said beam transversely toward the screen (15), carried by the opposite device, characterized in that on at least one of said devices (D, G) a unit constituted by the mirror (10) and the screen (15) is mounted on one end of a second tubular bar (8) whose other end is engaged telescopically and slidably in said first bar (2) so as to be movable toward and away from said fixing means (3, 4), the apparatus comprising on each device (D, G) means (22) for receiving a sub-assembly (7) for inspecting the pivot and castor angles and means (22') for fixing a device measuring the rake angle.

2. An apparatus according to claim 1, characterized in that on each device (G and D) the mirror (10) is slidably mounted relative to said fixing means (3, 4).

3. An apparatus according to claim 1, characterized in that said first bar (2, 2') is articulated to said fixing means (3, 4) in such manner as to pivot in a plane parallel to the wheel on which the device (D, G) is fixed.

4. An apparatus according to claim 3, characterized in that said first bar (2, 2') is articulated to said fixing means (3, 4) by means of links (50) constituting a deformable parallelogram structure (3, 50, 2, 50) which may be immobilized in any configuration, for example by means of at least one set screw (52).

5. An apparatus according to claim 4, characterized in that said sub-assembly (7) comprises a support (21) adapted to be fixed horizontally and perpendicularly to said first bar (2, 2') and carrying a first spherical spirit level (19), a second spirit level (25) articulated by means of a ball (28) on an L-shaped lever (32) connected by a universal joint by its apex (35) to said support (21), the two opposed ends (41, 42) thereof being each connected to a cam mechanism (43, 43') of known type which controls the inclination of said L-shaped lever (32) in two orthogonal planes, and means for shifting said mirror (10) roughly parallel to the axis of said beam relative to the point of fixing the device on said projector carrier.

6. An apparatus according to claim 1, characterized in that it comprises means (9) for immobilizing said second bar (8) relative to the first bar (2, 2').

7. An apparatus according to claim 6, characterized in that said first bar (2, 2') and said second bar (8) have complementary circular cross-sectional shapes.

## Patentansprüche

1. Vorrichtung zur Überprüfung der Geometrie der Räder eines Fahrzeugs, mit einer Kombination aus zwei entgegengesetzt zueinander angeordneten, jeweils an zwei einander gegenüberliegenden Rädern des Fahrzeugs parallel zu diesen befestigbaren Einrichtungen (D, G) mit jeweils einer ersten starren Hohlstrebe (2, 2') mit Elementen (3, 4) zur Befestigung an einer Projektionshalterung, mit Elementen im Innern der Strebe zum Projizieren eines Lichtbündels in Längsrichtung, wobei dieses Lichtbündel an dem einen Ende der ersten Strebe (2, 2') durch einen Spiegel (10) umgelenkt wird, welcher fest mit einem Schirm (15) verbunden ist, welcher so angeordnet ist, dass er das Lichtbündel quer, in Richtung auf den von der gegenüberliegenden Einrichtung getragenen Schirm (15) projiziert, dadurch gekennzeichnet, dass auf mindestens einer dieser Einrichtungen (D, G) eine aus dem Spiegel (10) und dem Schirm (15) bestehende Anordnung an einem Ende einer zweiten Hohlstrebe (8) befestigt ist, deren anderes Ende teleskopartig so in der ersten Hohlstrebe (2) verschiebbar ist, dass es sich den Befestigungselementen (3, 4) sowohl nähern als auch von diesen entfernen kann, und dass auf jeder Einrichtung (D, G) Elemente (22) für die Aufnahme einer Zusatzanordnung (7) zur Überprüfung der Dreh- und Nachlaufwinkel sowie Elemente (22') zur Befestigung einer Einrichtung zur Messung des Radsturzes vorgesehen sind.

2. Vorrichtung nach Anspruch 1, dadurch gekennzeichnet, dass der Spiegel (10) auf den Einrichtungen (G und D) gegenüber den Befestigungselementen (3, 4) jeweils gleitend angeordnet ist.

3. Vorrichtung nach Anspruch 1, dadurch gekennzeichnet, dass die erste Strebe (2, 2') so an die Befestigungselemente (3, 4) angelenkt ist, dass sie in einer Ebene parallel zu dem Rad, an dem die Einrichtung (D, G) befestigt ist, schwingt.

4. Vorrichtung nach Anspruch 3, dadurch gekennzeichnet, dass die erste Strebe (2, 2') an die Befestigungselemente (3, 4) mit Hilfe von Schwingarmen (50) angelenkt ist, welche ein veränderbares Parallelogramm (3, 50, 2, 50) bilden, das in jeder Lage arretierbar ist, zum Beispiel mit Hilfe mindestens einer Feststellschraube (52).

5. Vorrichtung nach Anspruch 4, dadurch gekennzeichnet, dass die Zusatzanordnung (7) einen Support (21) umfasst, welcher horizontal und senkrecht zu der ersten Strebe (2, 2') befestigbar ist und folgende Elemente aufweist:
   – eine erste Libelle (19),
   – eine zweite Libelle (25), welche über ein Gelenk (28) an einem Winkelhebel (32) angelenkt ist, der mit seinem oberen Teil (35) über ein Universalgelenk an den Support (21) angelenkt ist und dessen gegenüberliegende Enden (41, 42) jeweils mit einem an sich bekannten Nockenmechanismus (43, 43') verbunden sind, welcher die Neigung des Winkelhebels (32) in zwei orthogonalen Ebenen steuert, sowie

– Elemente zum Verschieben des Spiegels (10) im wesentlichen parallel zur Achse des Lichtbündels, bezogen auf den Befestigungspunkt der Einrichtung an der Projektionshalterung.

6. Vorrichtung nach Anspruch 1, dadurch gekennzeichnet, dass Mittel (9) zur Arretierung der zweiten Strebe (8) gegenüber der ersten Strebe (2, 2') vorgesehen sind.

7. Vorrichtung nach Anspruch 6, dadurch gekennzeichnet, dass die erste Strebe (2, 2') und die zweite Strebe (8) im Querschnitt komplementäre Kreisformen bilden.

FIG.1

FIG.2

0 053 065

FIG.3

FIG.4

FIG.5